(19) Europäisches Patentamt
European Patent Office
Office européen des brevets

(11) **EP 2 386 339 B1**

(12) **EUROPÄISCHE PATENTSCHRIFT**

(45) Veröffentlichungstag und Bekanntmachung des Hinweises auf die Patenterteilung:
**22.07.2015   Patentblatt 2015/30**

(21) Anmeldenummer: **11005628.0**

(22) Anmeldetag: **20.03.2007**

(51) Int Cl.:
*B01D 21/02* (2006.01)       *B01D 21/08* (2006.01)
*C01G 51/04* (2006.01)       *C01G 53/00* (2006.01)
*H01M 4/04* (2006.01)        *B01D 9/00* (2006.01)
*H01M 4/52* (2010.01)        *B82Y 30/00* (2011.01)
*C01G 1/00* (2006.01)        *H01M 4/90* (2006.01)
*H01M 4/525* (2010.01)

(54) **Verfahren zur Herstellung pulverförmiger Ni, Co-Mischhydroxide**

Method for producing powder Ni, Co alloy hydroxides

Procédé de fabrication d'hydroxydes mixtes de Ni et Co poudreux

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **31.03.2006  DE 102006015538**

(43) Veröffentlichungstag der Anmeldung:
**16.11.2011   Patentblatt 2011/46**

(62) Dokumentnummer(n) der früheren Anmeldung(en) nach Art. 76 EPÜ:
**07727130.2 / 2 007 493**

(73) Patentinhaber: **H.C. Starck GmbH**
**38642 Goslar (DE)**

(72) Erfinder:
• **Olbrich, Armin, Dr.**
 **38723 Seesen (DE)**
• **Meese-Martscheffel, Juliane, Dr.**
 **38642 Goslar (DE)**
• **Jahn, Matthias**
 **38642 Goslar (DE)**
• **Zertani, Rüdiger**
 **38642 Goslar (DE)**
• **Maikowske, Gerd**
 **38640 Goslar (DE)**
• **Albrecht, Sven, Dr.**
 **38642 Goslar (DE)**
• **Malcus, Stefan, Dr.**
 **38642 Goslar (DE)**
• **Kruft, Michael, Dr.**
 **56598 Rheinbrohl (DE)**
• **Die andere Erfinder haben auf ihre Nennung verzichtet.**

(56) Entgegenhaltungen:
**EP-A- 0 031 395       EP-A- 1 547 977**
**EP-A- 1 637 503       WO-A-2004/032260**
**DE-C2- 3 501 294      GB-A- 1 418 203**
**US-A1- 2004 110 066**

EP 2 386 339 B1

**Beschreibung**

Die vorliegende Erfindung betrifft ein Verfahren zur Herstellung von Ni, Co-Mischhydroxiden der allgemeinen Formel $Ni_xCo_{1-x}(OH)_2$.

Viele technisch wichtige Festkörperverbindungen werden durch Fällung aus Lösungen hergestellt, wobei als Lösungsmittel Wasser, organische Verbindungen, und/oder deren Mischungen in Frage kommen. Dies kann beispielsweise durch schnelle Abkühlung, plötzliche Herabsetzung der Löslichkeit der auszufällenden Verbindung, durch Zumischung eines weiteren Lösungsmittels, in dem die Verbindung schwerer löslich ist, oder durch chemische Reaktion, bei der die im Lösungsmittel schwerlösliche Verbindung überhaupt erst entsteht, erreicht werden. Die bei der Fällung durch homogene Keimbildung neu entstehende feste Phase besteht aus vielen kleinen Primärkristalliten, die durch Agglomeration Sekundärpartikel bilden oder sich an bereits vorhandene Sekundärpartikel anlagern.

An die Beschaffenheit der Primär- und Sekundärpartikel werden in der Regel genau definierte Anforderungen gestellt, um gewünschte Anwendungseigenschaften zu erzielen. Die Eigenschaften der Primärkristallite und der aus ihnen gebildeten Agglomerate hängen naturgemäß von den Prozessparametern ab. Die Anzahl der relevanten Prozessparameter kann unter Umständen relativ groß sein. Zu den chemisch-physikalischen Prozessparametern gehören beispielsweise Temperatur, Konzentrationen der Eduktlösungen, Konzentration von überschüssigem Fällungsreagenz in der Mutterlauge, Konzentration von Katalysatoren, pH-Wert, Ionenstärke etc. Die wichtigsten, mehr verfahrenstechnischen Anlagenparameter sind Verweilzeit, Feststoffkonzentration, mechanischer Energieeintrag, Reaktorgeometrie, Art der Durchmischung mit Rührern verschiedenen Typs oder Pumpen. Zu den grundlegenden verfahrenstechnischen Einstellungen gehört natürlich auch die Auswahl einer Batch- oder einer kontinuierlichen Arbeitsweise. Kontinuierliche Fällprozesse erlauben eine gleichmäßige Produktherstellung. Für die Prozessparameter existieren naturgemäß gewisse Bereiche, innerhalb derer sie eingestellt werden können. So haben die Edukte in den Eduktlösungen eine maximale Löslichkeit, die nicht überschritten werden kann. Daraus ergibt sich dann die maximal mögliche Feststoffkonzentration in der Produktsuspension. Diese kann aber beispielsweise auch durch die Löslichkeitsgrenze von eventuell bei der Fällungsreaktion entstehendem Neutralsalz in der Mutterlauge begrenzt sein. Andererseits kann es notwendig sein, mit Neutralsalzkonzentrationen zu arbeiten, die geringer sind als die sich natürlich aus den Eduktkonzentration ergebenden. Oft tritt das Problem auf, daß die Einstellung der Prozessparameter, die die Eigenschaften der Primärpartikel beeinflusst, nicht optimal oder sogar kontraproduktiv für die gewünschten Eigenschaften der Sekundärpartikel ist. Die Kunst besteht dann darin, eine Einstellung der Prozessparameter zu finden, die zu einem tragfähigen Kompromiss für die Eigenschaften der Primär- und Sekundärpartikel führt.

Es existieren also eine Reihe von Nebenbedingungen, die die definierte Einstellung von Produkteigenschaften erschweren. Darüber hinaus sind manche Produkteigenschaften wie z. B. spezifische Oberfläche, Porosität, Klopfdichte, Schüttgewicht, Korngrößenverteilung, Fließfähigkeit, Kristallitgröße etc. nicht zu erzielen, obwohl dies ohne die bestehenden Einschränkungen oft möglich erscheint. Man beobachtet beispielsweise bei einigen Metallhydroxiden, daß die spezifische Oberfläche bei den vorliegenden Reaktionsbedingungen streng monoton mit steigendem Feststoffgehalt fällt, kann aber den extrapolierten Feststoffgehalt für die gewünschte spezifische Oberfläche nicht einstellen, da er oberhalb des sich auf natürlicherweise ergebenden Feststoffgehaltes liegt.

Für moderne wiederaufladbare Hochleistungsbatterien bilden reine oder gemischte Übergangsmetallhydroxide, die in der Regel über Fällungsprozesse hergestellt werden, nur um ein Beispiel zu nennen, wichtige Komponenten oder Vorstoffe.
So stellt zum Beispiel mit Cobalt und Zink dotiertes Nickelhydroxid die aktive Komponente der positiven Elektrode in Nickel-Metall-Hydrid bzw. Nickel-Cadmium-Akkumulatoren dar (Z. Kristallogr. 220 (2005) 306-315). Für die bekannten Nickel-Metall-Hydrid-Batterien, beispielsweise, werden heutzutage in der Regel auf Schaumtechnologie beruhende Elektroden genutzt, die den Einsatz des positiven Aktivmaterials in Form sphäroidischer Partikel erfordern.

Ebenfalls sphäroidische Partikel kommen bei den immer wichtiger werdenden wiederaufladbaren Lithium-Ionen/Polymer-Batterien zum Einsatz. Seit geraumer Zeit wird - hauptsächlich aus wirtschaftlichen Gründen - weltweit versucht, das bisher in den Lithium-Ionen/Polymer-Akkumulatoren enthaltene teure Cobalt (in Form von LiCoO2) teilweise oder sogar ganz zu substituieren. Zu diesem Zweck werden u. a. Verbindungen der Metalle Ni, Mn und Al - wie z. B. Li(Ni,Co,Mn)O2 oder Li(Ni,Co,Al)O2 - intensiv untersucht. Der erste Schritt besteht hier in der Herstellung entsprechender sphärischer hydroxidischer Vorstoffe, die durch Co-Fällung synthetisiert, gegebenenfalls im Anschluss auch noch beschichtet werden, um dann über thermische Behandlung unter Zugabe einer Lithium-Komponente in das jeweilige oxidische Endprodukt umgewandelt zu werden.

Je nach Batterietyp, Hersteller und Anwendung des Akkumulators kommen heute die unterschiedlichsten Materialkompositionen zum Einsatz, und der Hersteller der sphärischen Hydroxide selbst sieht sich mit einer ganzen Palette unterschiedlichster Spezifikationen konfrontiert, die darüber hinaus in sich oftmals sehr enge Toleranzgrenzen für chemische und insbesondere die physikalischen Eigenschaften aufweisen.
Es ist offensichtlich, daß man diesem Problem - um überhaupt einigermaßen wirtschaftlich produzieren zu können - nicht mit einer beträchtlichen Anzahl verschiedener Produktionsanlagen, sondern nur mit einer sehr flexiblen, auf die jeweiligen Anforderungen einstellbaren, aber sehr stabil und definiert arbeitenden Anlage und Technologie begegnen kann. In der Regel sind in den Spezifikationen alle wesentlichen chemischen und natürlich insbesondere physikalischen Eigenschaften, wie z. B. Partikelgrößenverteilung, Klopfdichte, spezifische Oberfläche und mikrokristalliner Verbund (Kristallitgröße) genau vorgegeben. Alle diese Stoffeigenschaften hängen von einer ganzen Reihe von Prozeßparametern ab (wie z.B. Edukt-, Neutralsalz- und Feststoffkonzentrationen, Verweilzeit, Temperatur, Energieeintrag, usw.), und diese wirken naturgemäß nicht unbedingt gleichsinnig auf die vorgegebenen Produkteigenschaften. Daher ist es eine besondere Herausforderung bestimmte Eigenschaftskombinationen z.B. der hydroxidischen Vorstoffe realisieren zu können - und dies im Hinblick auf die geforderte Wirtschaftlichkeit - möglichst in einem einzigen, universell zu justierendem Anlagensystem.

Zwar ist es z. B. aus physikalischen Gründen nicht möglich, gleichzeitig die Porosität und die Klopfdichte eines sphäroidischen Materials zu maximieren, da diese beiden Eigenschaften gegenläufig sind. Es existiert jedoch eine Reihe von Abhängigkeiten zwischen einzelnen Produkteigenschaften, die innerhalb gewisser Grenzen verschiebbar sind. Die Kunst besteht nun darin, die verschiedenen Kombinationen der Anlagenparameter zu finden und praktisch mit möglichst einer Anlagentechnologie zu verwirklichen, die eine wenigstens teilweise unabhängige Einstellung der für die Batterieperformance wichtigen physikalischen Produkteigenschaften der hydroxidischen Batterievorstoffe erlaubt.

In JP 2006340 wird die kontinuierliche Herstellung von sphärischem Nickelhydroxid beschrieben. Dabei werden einem beheizten Ruhrkessel mit Überlauf kontinuierlich eine Nickelsalzlösung, Alkalilauge und wässrige Ammoniaklösung hinzugefügt. Nach 10 bis 30 Stunden wird der stationäre Zustand im Reaktorsystem erreicht, wonach kontinuierlich ein Produkt mit konstanter Qualität ausgetragen werden kann. Die mittlere Verweilzeit im Reaktor dauert 0,5 bis 5 Stunden. Bei diesem Verfahren sind die Feststoffkonzentration in der Suspension und die Neutralsalzkonzentration in der Mutterlauge über die Stöchiometrie der Fällungsreaktion zwangsläufig gekoppelt. Darüber hinaus bestimmt die temperaturabhängige Löslichkeitsgrenze des bei der Reaktion entstehenden Neutralsalzes die maximal erreichbare Feststoffkonzentration in der Suspension. Die Erreichung von der Neutralsalzkonzentration unabhängigen oder sehr hohen Feststoffkonzentrationen in der Suspension, z.B. um das Vielfache sind naturgemäß bei einem Verfahren gemäß JP 2006340 nicht möglich.

EP 0658514 B1 offenbart die kontinuierliche Fällung von Metallhydroxiden durch Zersetzung der Aminkomplexe in Gegenwart von Laugen in einem Treibstrahlreaktor. Hierbei werden die Edukte im Gegensatz zum Rührreaktor durch den austretenden Strahl einer Düse mit dem Reaktionsmedium vermischt. Die in JP 2006340 beschriebenen Einschränkungen hinsichtlich der Erhöhung der Feststoffkonzentration in der Suspension gelten ebenso für das Verfahren, welches in EP 0658514 B1 beschrieben ist.

US 2003/054252 A1 beschreibt Aktivmaterialien für Lithiumbatterien, sowie deren Herstellung. Zur Fällung der Vorstoffverbindungen wird ein batchweise betriebener Apparat empfohlen, der eine äußere Zirkulation von klarer Mutterlauge aufweist, die aus dem oberen Bereich des Reaktors abgepumpt und seitlich in ein Fallrohr eingeleitet wird, durch das sie von unten wieder in den Reaktor zurückströmt. Durch diese Aufwärtsströmung wird verhindert, dass zu kleine Teilchen durch das Fallrohr in das Auffanggefäß für das Fertigprodukt gelangen können. In dieses Auffanggefäß können nur die Teilchen absinken, die eine gewisse Mindestgröße erreicht haben. Das in US 2003/005452 beschriebene Verfahren zur Herstellung von Vorstoffen durch Fällung, ermöglicht keine voneinander unabhängige Einstellung der Prozessparameter. Ein direkter Eingriff in die Entwicklung der Korngrößenverteilung durch einen definierten Austrag einer Feinkornfraktion aus der Suspension ist mit diesem Verfahren nicht möglich.

EP 1637503 beschreibt ein pulverförmiges Mischmetallhydroxid auf Basis der Metalle Nickel, Cobalt und Aluminium, wobei die Pulverpartikel einen Kern aus Nickel-Kobalt-Hydroxid aufweisen, auf dessen Oberfläche amorphes Aluminiumhydroxid abgeschieden ist.

WO 2004/032260 A2 beschreibt ein Verfahren zur Herstellung von Nickelmischhydroxiden mit Klopfdichten zwischen 1,8 und 2,0 g/cm$^3$ sowie eine BET-Oberfläche zwischen 15 und 40 m$^2$/g, welche neben Nickel wenigstens einen Bestandteil der Gruppe Magnesium, Calcium, Zink, Kobalt, Mangan, Eisen, Chrom oder Seltene Erden enthalten, wobei die Eduktlösungen aus Vorratsbehältern einem Schlaufenreaktor zugeführt werden, von wo feststoffarme Reaktionslösung über einen Überlauf in einen Klärapparat geleitet wird. Der Unterlauf des Klärapparats kann über eine Rückführung mit einer Pumpe in den Reaktor zurückgespeist werden.

Die Aufgabe der vorliegenden Erfindung war es daher, ein Verfahren bereit zu stellen, mit dem die Bereiche der einzelnen Prozessparameter z.B. (Konzentration der Edukte, Feststoffgehalt in der Suspension, Salzkonzentration in der Mutterlauge) unabhängig voneinander eingestellt werden können und somit durch die Erweiterung bestehender und Schaffung neuer Freiheitsgrade eine maximale Flexibilität des Verfahrens zur Herstellung von Ni, Co - Mischhydroxiden durch Fällung aus Lösungen zu erreichen. Die Aufgabe der vorliegenden Erfindung war auch ein Verfahren bereitzustellen, welches einen kontrollierten Eingriff in die Entwicklung der Partikelgrößenverteilung während des Fällprozesses erlaubt. Eine weitere Aufgabe der vorliegenden Erfindung bestand auch darin und ein Verfahren zur Verfügung zu stellen, das es ermöglicht, die nach dem Stand der Technik maximal erreichbare Feststoffkonzentration auf ein Vielfaches zu erhöhen.

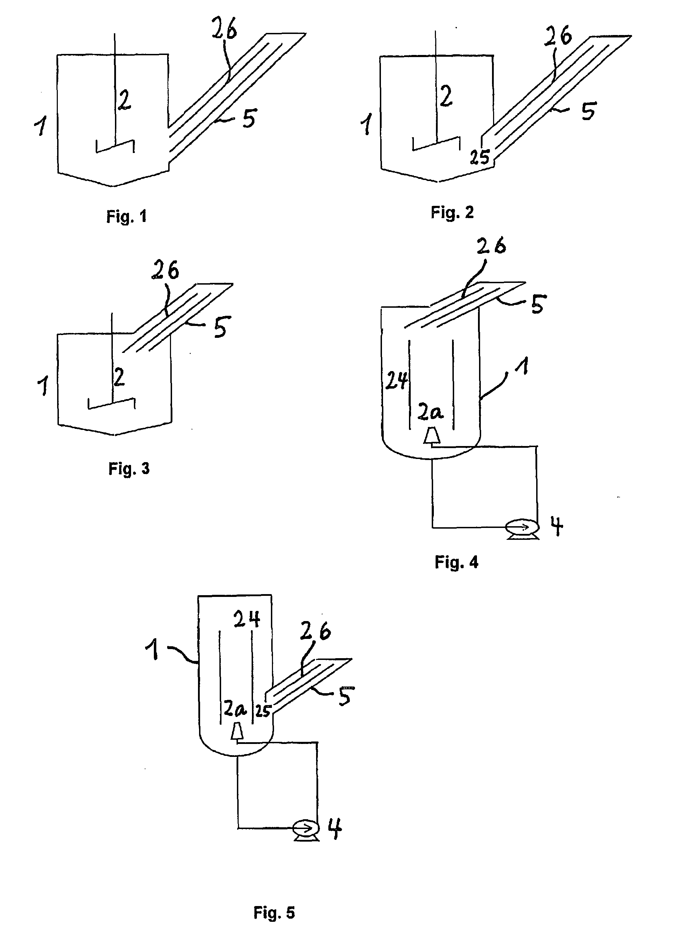

Die Aufgabe wurde gelöst durch Konstruktion einer Vorrichtung, die einen Reaktor mit integriertem Schrägklärer, im Folgenden "Integriertes Reaktor-Klärer-System (IRKS)" genannt, darstellt, Fig. 1 bis Fig. 5, und den Einsatz des IRKS als zentrale Einheit in Verbindung mit weiteren Apparaten (z.B. Filter, Behälter, Pumpen etc.) in einem Prozess, indem nach der Fällung von Verbindungen unter Bildung von Produktsuspension, bestehend aus Produkt und Mutterlauge, über den Schrägklärer Mutterlauge und Partikel abgezogen werden, so dass ein kontrollierter Eingriff in die Partikelgrößenverteilung und eine Erhöhung der Feststoffkonzentration um ein Vielfaches erreicht werden.

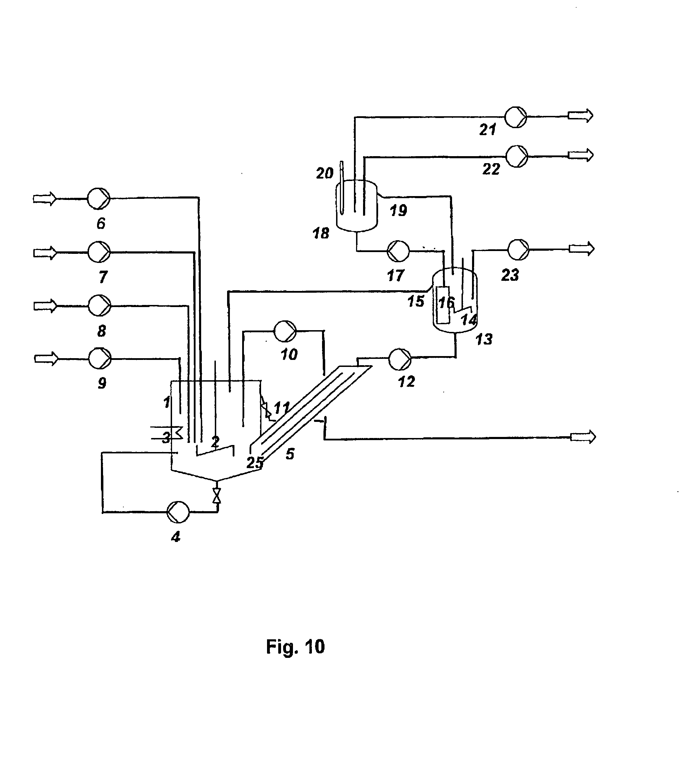

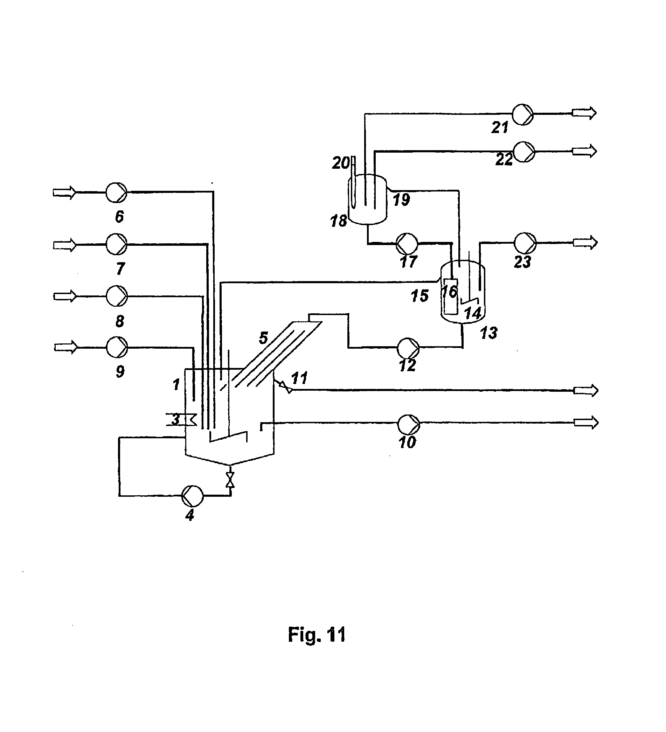

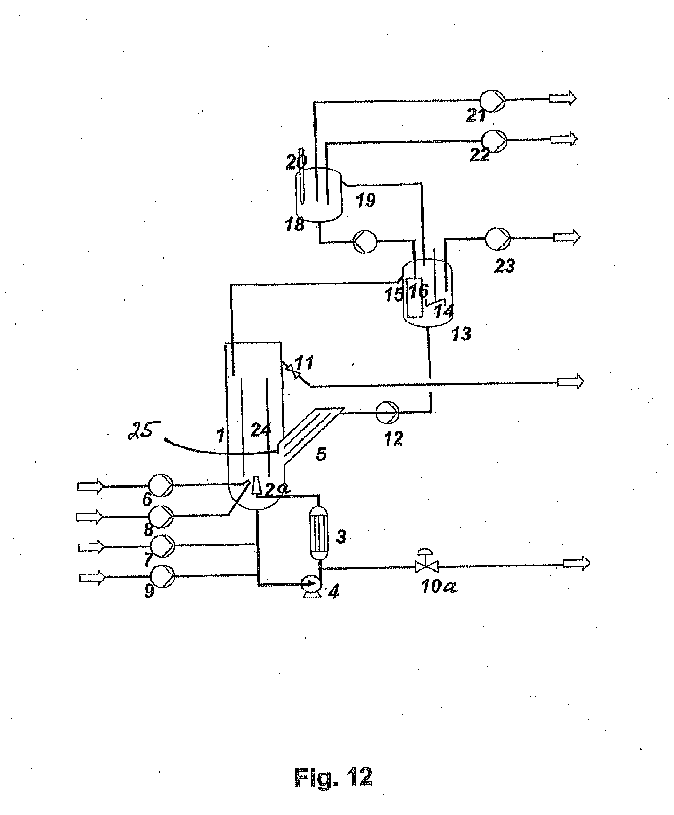

Gegenstand ist somit ein Integriertes Reaktor-Klärer-System (IRKS). Der Reaktor kann eine zylinderförmige oder quaderförmige Vorrichtung sein, Fig. 1 bis 5 (1), mit einem ebenen oder gewölbten oder konisch ausgebildeten Boden. Der Boden des Reaktors kann mit einer Öffnung versehen sein, über die gegebenenfalls mit Hilfe einer Pumpe (4) Suspension abgezogen und in den Reaktor zurückgepumpt werden kann, Fig. 4, 5, 10, 11 und 12. Um ein homogenes Fällprodukt zu erhalten, ist es wichtig, dass die Edukte beim Eintritt in den Reaktor gut gemischt werden. Dieser Reaktortyp kann auch als ein Rührreaktor betrieben werden, Fig. 1 bis 3. Hierbei werden üblicherweise Scheibenrührer, Propellerrührer, Schrägblattrührer, INTERMIG®-Rührer oder andere, dem speziellen Rührproblem angepasste Rührer verwendet. Auswahl, Anordnung und Dimensionierung eines geeigneten Rührers werden z.B. beschrieben bei Zlokarnik, Rührtechnik, Theorie und Praxis, Springerverlag 1999. Die Auslegung des Rührreaktors beeinflusst entscheidend die Partikelgröße und die Partikelgrößenverteilung, sowie das Absetzverhalten der Partikel im Reaktor. Die Fällprozesse im IRKS können in Abhängigkeit vom Produkt sowohl bei Zimmertemperatur als auch bei tieferen oder höheren Temperaturen durchgeführt werden. Die Temperaturen während des Fällprozesses im IRKS können daher - 20°C bis 100°C betragen. Bevorzugt werden die Fällprozesse bei Temperaturen von 20 bis 90°C und besonders bevorzugt bei Temperaturen von 30 bis 70°C durchgeführt. Besonders gute Ergebnisse bei der Herstellung von z.B. Batterievorstoffen, solcher wie Nickeloxide, Nickelhydroxide, Ni,Co-Mischoxide bzw. Ni,Co-Mischhydroxide werden bei Temperaturen im Bereich von 30 bis 70°C erreicht. Die Prozesstemperaturen werden, falls erforderlich, über einen Wärmetauscher (3) durch Heizung bzw. Kühlung eingestellt und geregelt, Fig. 10 und Fig. 11. Wenn mit externer Zirkulation gearbeitet wird, kann der Wärmetauscher (3) auch in dieser eingebaut werden, Fig. 12.

Der Schrägklärer (5) kann sich an einer beliebigen Stelle des Reaktors befinden, beispielsweise oben auf dem Reaktor aufgesetzt sein, wie in Fig. 3 4 und 11 dargestellt. Um die Bauhöhe zu verringern, kann der Schrägklärer auch vorteilhaft unten am Reaktor angebracht sein, Fig. 1, 2, 5, 10 und 12. Das IRKS wird zur Fällung von chemischen Verbindungen aus Lösungen eingesetzt. Im Schrägklärer wird die Mutterlauge zusammen mit einer definierten Feinkornfraktion des Feststoffes von der Produktsuspension getrennt. Diese wenige g/l feststoffenthaltende trübe Flüssigkeit wird größtenteils in den Reaktor zurückgeführt und wieder mit der Produktsuspension vereinigt. Durch Entnahme eines Teils dieser trüben Flüssigkeit wird der Produktsuspension Feinanteil entzogen und die Partikelgrößenverteilung zu höheren $D_{50}$ - Werten verschoben. Ein weiterer Zweck des Schrägklärers besteht darin, eine vorgeklärte, nur wenig Feststoff enthaltende Flüssigkeit bereitzustellen, aus der auf einfache Weise klare Mutterlauge durch Filtration abgetrennt werden kann.

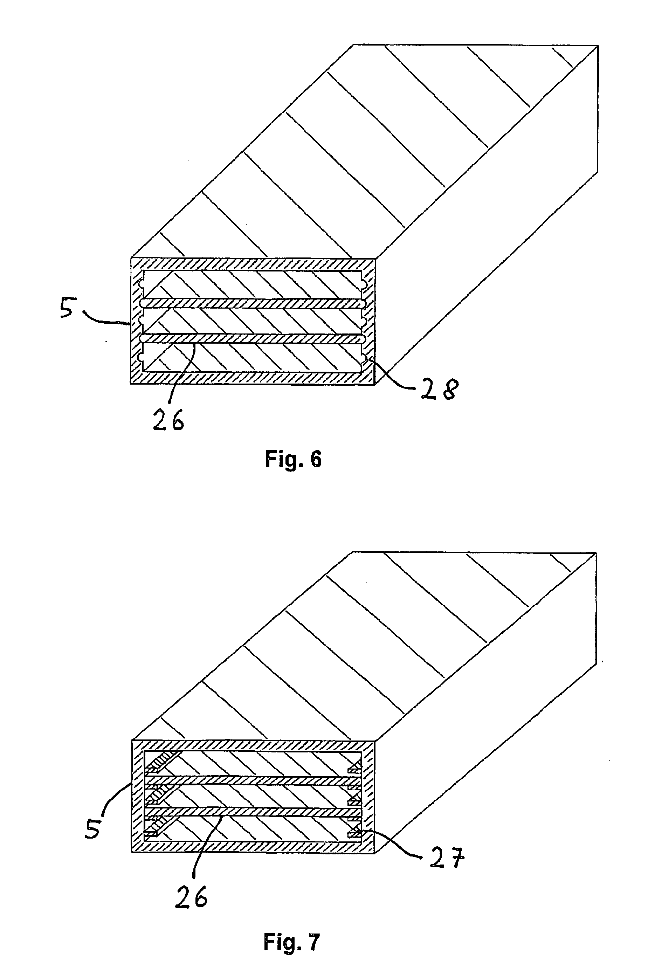

Um die Trennleistung des Schrägklärers zu erhöhen, können eine oder mehrere Lamellen (26), Fig. 1 bis 8 und 10 bis 12, eingebaut werden, auf denen Feststoffpartikel, nachdem sie durch Sedimentation die Oberfläche der Lamellen erreicht haben, nach unten in die homogen durchmischte Suspension zurückrutschen. Die Lamellen sind in dem Schrägklärer planparallel zur dessen Bodenfläche angeordnet. Die Lamellen stellen rechteckige Platten dar, die aus Kunststoff, Glas, Holz, Metall oder Keramik bestehen können. Die Dicke der Lamellen kann in Abhängigkeit vom Material und Produkt bis zu 10 cm betragen. Bevorzugt werden Lamellen mit eine Dicke von 0,5 bis 5 cm, besonders bevorzugt von 0,5 bis 1,5 cm eingesetzt. Die Lamellen (26) werden im Schrägklärer fest eingebaut. Sie können auch abnehmbar sein, Fig. 6 und Fig. 7. In diesem Fall werden sie über das auf den Innenseiten des Schrägklärers seitlich angebrachten Schienensystems (27) in Fig. 7, oder Nuten (28) in Fig. 6 in den Schrägklärer (5) eingeschoben. Das Schienensystem kann auch höhenverstellbar ausgebaut sein, wodurch dem Schrägklärer große Flexibilität im Bezug auf die Wahl der Lamellenabstände verliehen wird. Der Schrägklärer (5) kann zylinderförmig mit einem runden Querschnitt oder quaderförmig, mit einem viereckigen Querschnitt ausgeführt sein, Fig. 6 und Fig. 7. Damit das Zurückrutschen der Partikel ohne Verstopfung des Schrägkläres funktioniert, beträgt der Winkel des Schrägklärers gegen die Horizontale 20 bis 85°, vorzugsweise 40 bis 70° und besonders bevorzugt 50 bis 60°. Der Schrägklärer kann auch über eine flexible Verbindung am Reaktor angebracht sein. Bei dieser Ausführung kann der Winkel während des Prozesses variabel eingestellt werden.

In einer bevorzugten Ausführung enthält der Schrägklärer am Einlauf im inneren des Reaktors eine Platte (25), Fig. 2, 5, 10 und 12, die planparallel zur Öffnung der Eintrittsfläche des Schrägklärers angeordnet ist. Diese Platte verhindert, dass der Schrägklärer im Einlaufbereich durch hochkonzentrierte Suspension verstopfen kann.

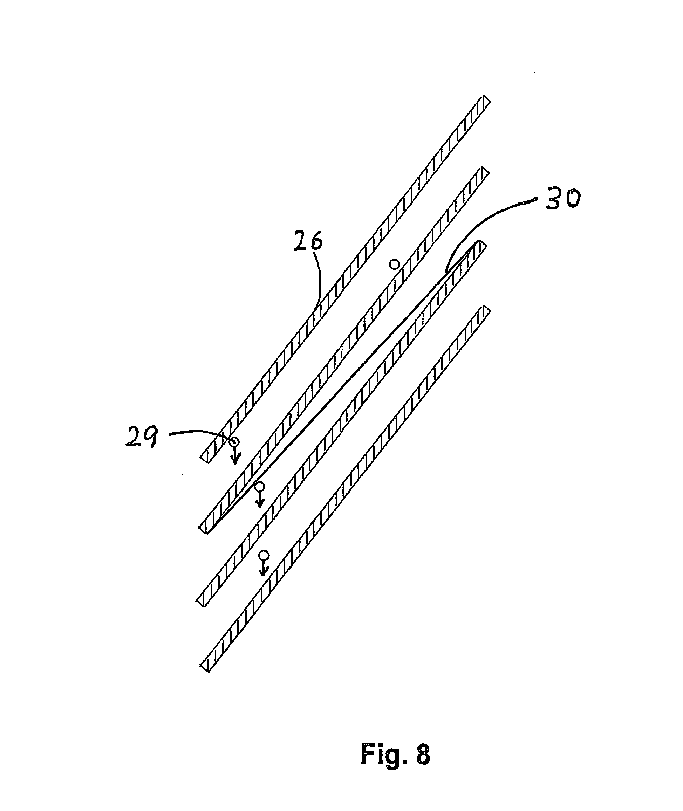

Um die Funktionsweise des IRKS besser zu verstehen, wird nachstehend eine detaillierte Erläuterung anhand der Fig. 8 angeführt:

Die Feststoffpartikel (29) sinken im Schrägklärer, Fig. 8, in Abhängigkeit von ihrer Form und Größe mit konstanter Geschwindigkeit nach unten. Setzt man beispielsweise Stokes-Reibung voraus, so ist die durch die effektive Gewichtskraft hervorgerufene Sinkgeschwindigkeit für kugelförmige Partikel proportional dem Quadrat des Partikeldurchmessers. Diese Geschwindigkeit ist nun von der Aufwärtskomponente der Geschwindigkeit der laminaren Strömung im Schrägklärer überlagert. Alle Feststoffpartikel, deren Sinkgeschwindigkeit vom Betrag her kleiner oder gleich ist, als die Aufwärtskomponente der Flüssigkeitsströmung können nicht bis auf die Oberfläche einer Lamelle (26) oder der Bodenfläche des Schrägklärers absinken und werden folglich mit dem Oberlauf des Schrägklärers ausgetragen.

Ist die Sinkgeschwindigkeit der Partikel vom Betrage größer als die Aufwärtskomponente der Flüssigkeitsströmung, setzt eine Abwärtsbewegung der Partikel mit einer konstanten Sinkgeschwindigkeit ein. Ob solch ein Partikel mit dem Oberlauf aus dem Schrägklärer ausgetragen wird oder nicht, hängt bei konstanter Strömungsgeschwindigkeit der Flüssigkeit von dem senkrechten Abstand des Partikels zur Lamelle beim Eintritt in den Schrägklärer sowie der Länge und dem Anstellwinkel des Schrägklärers ab. Man sieht leicht, dass ein kritischer Teilchenradius $r_0$ existiert, so dass alle Partikel mit $r > r_0$ vollständig vom Schrägklärer zurückgehalten werden. Die Gerade (30) in Fig. 8 zeigt die Bahn eines Partikels mit dem Grenzradius $r_0$. Die Bahnen aller Partikel, deren Radius größer ist, weisen einen kleineren Winkel gegen die Horizontale auf und treffen daher mit Sicherheit auf einer Lamelle oder der Bodenplatte auf. Das bedeutet, dass sie zurückgehalten werden. Durch Anpassung der Verhältnisse im Schrägklärer, insbesondere der Strömungsgeschwindigkeit der Flüssigkeit kann also eine Obergrenze für den Teilchendurchmesser der Feinpartikel, die den Schrägklärer im Oberlauf verlassen, eingestellt werden. Solange der Oberlauf des Schrägkläres über einen Umlaufbehälter (13) wie in Fig. 10 und 12 in den Rührreaktor zurückfließt, ändert sich am Gesamtsystem nichts. Entnimmt man mit einer Pumpe einen Teil der durch den Feinanteil des Feststoffes getrübten Flüssigkeitsmenge aus dem Umlaufbehälter, so wird ein definierter Bruchteil des Feinkorns ausgetragen, und man kann direkt in die Entwicklung der Partikelgrößenverteilung eingreifen. Dies stellt eine für die Steuerung von Fällungsprozessen neue Variationsmöglichkeit dar, wodurch die Partikelgröße sowie die Partikelgrößenverteilung unabhängig von den anderen Anlagenparametern beeinflusst werden können.

Durch die beschriebene Entnahme von Trübelauf, dessen Feststoffkonzentration beim Eintritt in den Umlaufbehälter typischerweise 0,5 bis 5% der Feststoffkonzentration im Reaktor beträgt, erhöht man natürlich gleichzeitig auch die Feststoffkonzentration der Suspension im Reaktor, denn mit der gezielten Entnahme des Feinkornanteils wird dem Gesamtsystem überproportional viel Mutterlauge entzogen. Dies ist in der Regel gewünscht, ist aber unerwünscht, wenn die Feststoffkonzentration im Reaktor auf niedrigem Niveau gehalten werden soll und durch Einstellung anderer Stoffströme der Erhöhung der Feststoffkonzentration nicht hinreichend entgegengewirkt werden kann. Je nach Menge und Spezifikation kann dieser Feinanteil anschließend wieder der Produktsuspension zugemischt werden. Entscheidend ist die Trennung im Reaktor-Klärer-System.

In diesem Fall bietet es sich an, über ein Filterelement (16), Fig. 10 bis 12, Mutterlauge aus dem Umlaufbehälter zu entnehmen und direkt in den Reaktor zurückzupumpen, um die Feststoffkonzentration der Trübe zu erhöhen. Bei Austrag derselben Menge Feinkorn wird dann weniger Mutterlauge entzogen. Als Feinkorn werden die Partikel bezeichnet, deren Größe 30% des $D_{50}$ - Wertes der Partikelgrößenverteilung nicht überschreitet. Es kann auch vorteilhaft sein, im Umlaufbehälter dem System nur Mutterlauge über das Filterelement zu entnehmen. Hierdurch kann man den Feststoffgehalt im Reaktor erstens auf ein Mehrfaches der stöchiometrischen Feststoffkonzentration erhöhen und zweitens eine Entkopplung zwischen der Konzentration gegebenenfalls bei der Fällungsreaktion entstehenden Neutralsalzes und der Feststoffkonzentration erreichen. Das Konzentrationsverhältnis Feststoff zu Salz im Reaktor kann durch die Möglichkeit der Entnahme von Mutterlauge beispielsweise nicht nur durch Erhöhung der Feststoffkonzentration bei konstanter Salzkonzentration vergrößert werden, sondern auch dadurch, dass bei konstanter Feststoffkonzentration dem Reaktor salzfreies Lösungsmittel zugegeben und gleichzeitig die äquivalente Menge Mutterlauge über das Filterelement dem System entzogen wird.

Die Erreichung der zusätzlichen Freiheitsgrade bei gleichzeitiger Steigerung der Flexibilität des IRKS soll am Beispiel der beiden Parameter Salzkonzentration und Feststoffgehalt für die allgemeine Reaktion AX + BY => $AY_{fest}$ + $BX_{gelöst}$, näher erläutert werden. AX und BY sollen die Edukte in den Eduktlösungen und BX gelöstes Salz in der Mutterlauge bedeuten. AY stellt das als unlöslicher Feststoff anfallende Produkt dar.

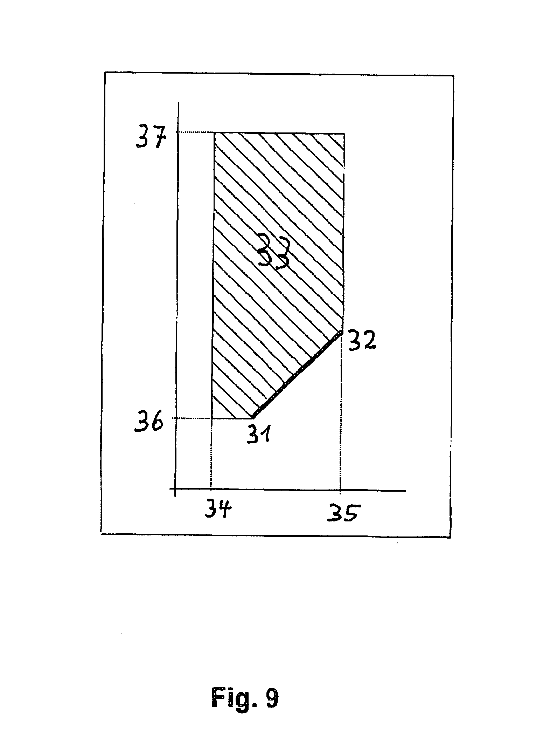

In Fig. 9 ist schematisch die Erweiterung der vorhandener und Schaffung neuer Freiheitsgrade für die vorbenannte Reaktion dargestellt. Darin bedeuten:

(37) - Technische Grenze,
(35) - Chemische Grenze,
(34, 36) - Wirtschaftliche Grenze.

In Fig. 9 zeigt der fettgedruckte Abschnitt als (31 - 32) den Bereich, der nach dem Stand der Technik für die Variation der beiden Prozessparameter Neutralsalzkonzentration in der Mutterlauge und Feststoffkonzentration in der Suspension zur Verfügung steht. Nach oben ist diese Gerade durch die Löslichkeit des Salzes BX limitiert, nach unten existiert eine wirtschaftliche Grenze für einen Mindestfeststoffgehalt. Aufgrund der Stöchiometrie der Reaktion ist man also dem Stand der Technik entsprechend auf einen eindimensionalen Raum bezüglich dieser beiden Parameter eingeschränkt. Mit Hilfe des IRKS und des erfindungsgemäßen Verfahrens wird dieser eindimensionale Bereich zu einem zweidimensionalen Bereich (33) erweitert, dahingehend, dass die maximale Feststoffkonzentration um ein Mehrfaches erhöht und gleichzeitig die minimale Salzkonzentration signifikant herabgesetzt werden kann und sämtliche Kombinationen aus den nun erweiterten Bereichen für die Feststoffkonzentration und die Neutralsalzkonzentration eingestellt werden können. Die hierdurch gewonnene Flexibilität in der Prozessführung ist unmittelbar einleuchtend. Eine Bewegung im Diagramm vertikal nach oben entspricht Entnahme von Mutterlauge und hat die korrespondierende Erhöhung der Feststoffkonzentration zur Folge. Einer Bewegung im Diagramm horizontal nach links entspricht der Zuführung von zusätzlichem Lösungsmittel bei gleichzeitiger Entnahme der korrespondierenden Menge an Mutterlauge.

Das IRKS kann sowohl offen als auch geschlossen betrieben werden. Ein geschlossenes System ist z. B. ein Treibstrahlreaktor, der in Fig. 4 und Fig. 5 und in Fig. 12 dargestellt ist. Bei diesem Reaktor kann der Schrägklärer (5) sowohl im oberen, Fig. 4, als auch im unteren Bereich, Fig. 5 und 12, angeordnet sein. Die Edukte werden hier durch eine oder mehrere Düsen (2a) in die Reaktionszone des Reaktors eingeführt, wo diese eine intensive Durchmischung bzw. Homogenisierung erfahren, wie in Fig. 4 und 5 und 12 dargestellt.

Das IRKS kann für Fällungen eingesetzt werde, die batchweise erfolgen. Bevorzugt wird dieses jedoch für Fällprozesse in der kontinuierlichen Arbeitsweise.

Die Erfindung betrifft ein Verfahren zur Herstellung von Ni, Co-Mischhydroxiden durch Fällung, in dem die einzelnen Prozessparameter z.B. (Konzentration der Edukte, Feststoffgehalt in der Suspension, Salzkonzentration in der Mutterlauge), während der Fällung unabhängig voneinander eingestellt werden und so ein kontrollierter Eingriff in die Entwicklung der Partikelgrößenverteilung während des Fällprozesses stattfindet und folglich maßgeschneiderte Produkte mit definierten physikalischen Eigenschaften besonders wirtschaftlich und mit einer sehr hohen Raum-Zeit-Ausbeute hergestellt werden.

Gegenstand der Erfindung ist daher ein Verfahren zur Herstellung wie in Anspruch 1 definiert.

Die Eduktlösungen im erfindungsgemäßen Verfahren werden in den Reaktor mit Hilfe eines Pumpsystems eingeleitet. Handelt es sich dabei um das IRKS mit einem Rührreaktor, werden die Edukte unter Rührereinsatz gemischt. Wenn das IRKS in Form eines Treibstrahlreaktors ausgeführt ist, erfolgt die Vermischung der Edukte durch den austretenden Strahl einer Düse, Fig. 12 (2a). Um eine noch bessere Vermischung der Edukte zu erreichen, kann auch zusätzlich Luft oder Inertgas in den Reaktor eingeleitet werden. Um eine gleichmäßige Produktqualität zu erreichen, ist es erforderlich, daß die Edukte in der Reaktionszone des Reaktors homogen durchmischt sind. Schon während der Vermischung bzw. Homogenisierung der Edukte beginnt eine Fällreaktion, bei der das Produkt und die Mutterlauge erzeugt werden. Die Produkt-Suspension wird im unteren Reaktorteil bis zu einer gewünschten Konzentration angereichert. Um eine gezielte Anreicherung der Produktsuspension zu erreichen, wird im erfindungsgemäßen Verfahren die Mutterlauge über den Schrägklärer, Fig. 10 (5), partiell abgezogen. Bevorzugt findet die partielle Abtrennung der Mutterlauge durch die Entnahme des Schrägklärer-Oberlaufs mit Hilfe einer Pumpe statt. Der Feststoffgehalt des Oberlaufs kann bis zu 50%, bevorzugt bis zu 30%, besonders bevorzugt bis zu 15 % und insbesondere bevorzugt bis zu 5 % der Produktsuspension enthalten. Eine wichtige Rolle bei der Entwicklung der Korngrößenverteilung während des Fällprozesses spielt die maximale Teilchengröße im Oberlauf. Die Teilchen im Oberlauf werden als Feinkorn bezeichnet. Diese maximale Teilchengröße im Oberlauf kann bis zu 50%, bevorzugt bis zu 40%, besonders bevorzugt bis zu 30% des $D_{50}$-Wertes der Teilchengrößenverteilung betragen.

Nach dem erfindungsgemäßen Verfahren wird eine Konzentration der Fällprodukt-Suspension erreicht, die ein Vielfaches der stöchiometrisch möglichen Konzentration des Fällproduktes betragen kann. Diese kann bis 20 mal höher liegen als der mögliche stöchiometrische Wert. Zur Erreichung einer besonders hohen Produktkonzentration in der Suspension ist es notwendig eine hohe Menge der Mutterlauge partiell abzuziehen. Es können sogar bis zu 95 % der Mutterlauge partiell abgetrennt werden. Die Menge der partiell abzutrennenden Mutterlauge hängt von den gewählten Prozessparametern wie Eduktkonzentrationen, Salzkonzentration der Mutterlauge sowie Feststoffkonzentration der Suspension ab.

Das erfindungsgemäße Verfahren ist in Fig. 10 schematisch dargestellt und wird nun zum besseren Verständnis nachfolgend wie folgt erörtert:

Einem Rührreaktor (1), ausgestattet mit drehzahlgeregeltem Rührer (2), Wärmetauscher (3), optional einer Umlaufpumpe (4) und einem Schrägkläreransatz (5), der eine höherverstellbare, planparallel zu seiner Eintrittsöffnung angeordnete Platte (25) aufweist, werden kontinuierlich mit den Dosierpumpen (6) bis (8) Eduktlösungen, eventuell Katalysatorlösungen sowie Lösungsmittel in die homogen durchmischte Reaktionszone des Integrierten Reaktor-Klärer-Sytems (IRKS) gefördert. Die entstehende Produktsuspension wird mit der Pumpe (10) über eine Regelung des Füllstandes entnommen oder fließt über den freien Überlauf (11) ab. Bei der Herstellung großer Partikel kann es vorteilhaft sein, die Zirkulationspumpe (4) in Betrieb zu nehmen, um der Gefahr von Sedimentation vorzubeugen.

Die Pumpe (12), in Abhängigkeit von der Höhe des Schrägkläres (5) gegebenenfalls in selbstansaugender Ausführung, fördert aus diesem Flüssigkeit mit sehr geringen Konzentrationen von Feinkorn in den mit einem Rührer (14) ausgestatteten Behälter (13) und kann von dort aus dem freien Überlauf (15) in den Reaktor (1) zurückfließen. In Abhängigkeit vom Volumenstrom der Flüssigkeit und der Dimensionierung des Schrägkläreransatzes existiert eine Trenngröße, so dass nur Partikel deren Größe unterhalb dieser Trenngröße liegt, in den Umlaufbehälter (13) befördert werden. Solange der gesamte, mit der Pumpe (12) entnommene Trübelauf über den freien Überlauf (15) zurückläuft, ändert sich für den Reaktor (1) natürlich gar nichts. Dies geschieht erst, wenn Mutterlauge und/oder Feststoffpartikel dem System entzogen werden. Im Folgenden wird zunächst die Entnahme von Mutterlauge beschrieben:

Durch ein Filterelement (16), beispielsweise einen auch in Querstromfiltrationen verwendeten Filterschlauch, entzieht die Pumpe (17) dem Behälter (13) die klare Mutterlauge und fördert sie in den zweiten Umlaufbehälter (18). Aus diesem Behälter fördert die Pumpe (21) kontinuierlich oder in bestimmten Zeitabständen Probenlösung zur - vorzugsweise automatischen- Analyse der Mutterlauge. Eine kontinuierliche Überwachung, beispielsweise durch Messung und Kontrolle des pH-Wertes mit der Sonde (21) kann auch direkt im klare Mutterlauge enthaltenden Umlaufbehälter (18) erfolgen. Das IRKS ermöglicht also auf einfache Weise, die Zusammensetzung der Mutterlauge während der gesamten Fällung zu kontrollieren, was naturgemäß in einer hoch feststoffhaltigen Suspension sehr schwierig ist. Wird nun aus dem Umlaufbehälter (18) über Pumpe (22) Mutterlauge dem System entzogen, kann die Feststoffkonzentration im Reaktor (1) unabhängig von den Eduktkonzentrationen eingestellt werden. Auf diese Weise geschieht auch eine Entkopplung zwischen der Festoffkonzentration der Suspension und der Konzentration von Salzen in der Mutterlauge, die bei vielen Fällungsreaktionen als Nebenprodukt entstehen.

Die natürliche Feststoffkonzentration kann um ein Vielfaches gesteigert werden, und die damit erzielbaren Raum-Zeit-Ausbeuten sind nach den üblichen Methoden nicht oder nur sehr schwer zu realisieren. Die direkte Entnahme von Mutterlauge über eine Querstromfiltration, die beispielsweise in den Kreislauf der Pumpe (4) des Reaktors (1) geschaltet wird, ist nicht praktikabel, da durch die hohe Feststoffkonzentration andauernd Verstopfungen auftreten würden, was naheliegend ist.

Fällt man beispielsweise $BaSO_4$ aus $Ba(OH)_2$-Lösung und Schwefelsäure, so entsteht als Nebenprodukt Wasser und die Entkopplung reduziert sich auf die Prozessparameter Ba - und $H_2SO_4$-Konzentration in den Eduktlösungen und $BaSO_4$-Konzentration in der Produktsuspension. Bei der Fällung von Nickelhydroxid aus beispielsweise Nickelsulfatlösung und Natronlauge entsteht Natriumsulfat als Nebenprodukt. Der Feststoffgehalt der Suspension und die Salzkonzentration können nun unabhängig voneinander eingestellt werden. Die Erhöhung des Feststoffgehaltes war soeben beschrieben worden. Will man auch die Salzkonzentration unabhängig von den Eduktkonzentrationen einstellen, kann man mit Pumpe (9) Wasser in das System fördern und über die Pumpe (22) die entsprechende Menge Mutterlauge entfernen, so dass beispielsweise eine vorgegebene Feststoffkonzentration erhalten bleibt.

Ein wesentliches Merkmal des erfindungsgemäßen Verfahrens sowie des integrierten Reaktorklärersystems IRKS ist es auch, durch die Entnahme von Trüblauf aus dem System über die Pumpe (23) dem Reaktionssystem eine definierte Fraktion an Feinkorn zu entziehen, um so direkt in die Entwicklung der Partikelgrößenverteilung des Produktes einzugreifen. Weiter oben wurde bereits beschrieben, daß für die Feststoffpartikel im Umlaufbehälter (13) eine obere Korngröße existiert, die durch die Dimensionierung des Schrägklärersansatzes (5) und die Umlaufmenge der Pumpe (12) bestimmt ist. Der Rührer (14) sorgt dafür, daß diese feinen Partikel homogen in der Flüssigkeit verteilt sind. Damit ist eine definierte Abnahme einer Feinkornfraktion aus dem Gesamtsystem und damit auch aus dem Reaktor (1) möglich. In der Regel beträgt die Feinkornfraktion nur wenige Prozent der Gesamtmasse, aber ihr Anteil beeinflusst entscheidend die Entwicklung der Kornverteilung des im Reaktor produzierten Feststoffes. Ein direkter Eingriff in den Wachstumsmechanismus der Partikel bei einer Fällungsreaktion ist mit den üblichen Verfahren gemäß dem Stand der Technik nicht möglich und wird hier erstmals realisiert. Die sich hieraus ergebenden Möglichkeiten sind vielfältig. Nicht nur die kontrollierte Verschiebung des $D_{50}$-Wertes der Partikelgrößenverteilung, sondern auch die Einstellung der Breite der Verteilung ist möglich. Der Prozess lässt sich somit durch diesen neuen Freiheitsgrad besser steuern, insbesondere können sphärische Partikel mit höherer mittlerer Korngröße hergestellt werden, als es sonst unter den Reaktionsbedingungen möglich wäre.

Das in Fig. 11 dargestellte erfindungsgemäße Verfahren, unterscheidet sich von dem oben beschriebenen Verfahren in Fig. 10 dadurch, daß hier ein Integriertes Reaktor-Klärer-System mit einem Schrägklärer verwendet wird, der am Reaktor oben angeordnet ist. Fig. 12 stellt ein erfindungsgemäßes Verfahren dar, bei dem die Fällungsreaktion in einem geschossenen IRKS (1) welches als Treibstrahlreaktor ausgeführt ist, stattfindet.

Mit dem IRKS und dem erfindungsgemäßen Verfahren lassen sich zahlreiche chemische Verbindungen herstellen, deren physikalische Eigenschaften, wie z.B. Korngröße, Korngrößenverteilung, Schüttgewicht, Korngrößenverteilung, Klopfdichte, Teilchenform etc. ganz gezielt beeinflusst werden können, so dass am Ende des Prozesses maßgeschneiderte Produkte erhalten werden. Derartige Verbindungen sind z.B. Carbonate oder basische Carbonate des Cobalts, des Nickels oder des Zinks, die mit unterschiedlichen Dotierungselementen versetzt sein können. Das erfindungsgemäße Verfahren eignet sich auch bevorzugt zur Herstellung von Zinkoxiden, Kupferoxiden oder Silberoxiden. Weiterhin ist das IRKS und das erfindungsgemäße Verfahren besonders gut geeignet zur Herstellung von Tantaloxiden, Nioboxiden, Tantalaten und Niobaten. Titandioxid, Zirkoniumdioxid und Hafniumdioxid können ebenfalls hergestellt werden, wobei die Oxide mit Metallen anderer Wertigkeitsstufen, wie Seltenerd-Elementen, beispielsweise den Yttrium, Ytterbium oder Scandium dotiert sein können. Ammoniumdimolybdate, Ammoniumheptamolybdate, Dimolybdate, Heptamolybdate, Parawolframate, Ammoniumparawolframat, sphäroidische Wolframsäure und Molybdänsäure können ebenfalls vorteilhaft mit dem erfindungsgemäßen Verfahren hergestellt werden.

Oxide der Seltenerdmetalle können ebenfalls hergestellt werden. IRKS kann vorteilhaft genutzt zur Herstellung von Spinellen, Perowskiten und Festkörperverbindungen mit Rutilstruktur. Schwerlösliche Halogenide und Sulfide sind durch das erfindungsgemäße Verfahren ebenfalls mit hoher Raumzeitausbeute und hohen Klopfdichten erhältlich. Das erfindungsgemäße Verfahren und das IRKS eignet sich ganz besonders zur Herstellung gecoateter Produkte, indem ein gleichmäßiges Coating der unterschiedlichsten Art in hochkonzentrierter Suspension durchgeführt werden kann.

Insbesondere lassen sich mit diesem Verfahren Verbindungen herstellen die sich besonders gut als Vorstoffe für den Einsatz in den elektrochemischen Zellen und/oder als Elektrodenmaterial bei der Herstellung von Brennstoffzellen eignen. Diese sind Nickelhydroxide, oder Nickeloxyhydroxide, die mit einem oder mehreren zweiwertigen oder dreiwertigen Metallen wie beispielsweise Co, Zn, Mn, Al, und/oder dreiwertigen Seltenerd-Elementen dotiert sein können, aber auch Beschichtungen in Form von Cobalt- oder beispielsweise Aluminiumhydroxiden können auf Basiskomponenten, wie z. B. Nickelhydroxide erfindungsgemäß aufgefällt werden. Lithiumeisenphosphate mit definierten physikalischen Eigenschaften sind ebenfalls über IRKS zugänglich. Besonders bevorzugt werden nach dem erfindungsgemäßen Verfahren Nickel-Cobalt-Mischhydroxide der allgemeinen Formel $Ni_xCo_{1-x}(OH)_2$ hergestellt, die als Vorstoffe in den elektrochemischen Zellen und/oder als Elektrodenmaterial bei der Herstellung von Brennstoffzellen bevorzugt eingesetzt werden.

Gegenstand sind daher pulverförmige Ni,Co - Mischhydroxide der allgemeinen Formel $Ni_xCo_{1-x}(OH)2$, wobei $0 < x < 1$, die eine BET-Oberfläche, gemessen nach ASTM D 3663 von weniger als 20 $m^2/g$ und eine Klopfdichte, gemessen nach ASTM B 527, von größer als 2,4 $g/cm^3$ aufweisen. Bevorzugt weisen die Ni,Co-Mischhydroxide eine BET-Oberfläche von weniger als 15 $m^2/g$ und eine Klopfdichte von größer als 2,45 $g/cm^3$, besonders bevorzugt eine BET-Oberfläche von weniger als 15 $m^2/g$ und eine Klopfdichte von größer als 2,5 $g/cm^3$ und insbesondere bevorzugt eine BET-Oberfläche von weniger als 15 $m^2/g$ und eine Klopfdichte von größer als 2,55 $g/cm^3$ auf.

Die pulverförmige Ni,Co-Mischhydroxide zeichnen sich auch dadurch aus, dass sie einen $D_{50}$-Wert bestimmt mittels MasterSizer nach ASTM B 822 von 3-30 $\mu$m, bevorzugt von 10-20 $\mu$m aufweisen.

Die Ni,Co-Mischhydroxide können sowohl in sphäroidischer als auch in regulärer Partikelform hergestellt werden. Die bevorzugten Ni, Co - Mischhydroxide zeichnen sich besonders durch die sphäroidische Form der Partikel aus, deren Formfaktor einen Wert von größer 0,7, besonders bevorzugt von größer 0,9 aufweist. Der Formfaktor der Partikel kann nach der in US 5476530, Spalten 7 und 8 und Fig.5 genannten Methode bestimmt werden. Diese Methode ermittelt einen Formfaktor der Partikel, welcher ein Maß für die Sphärizität der Partikel ist. Der Formfaktor der Partikel kann auch aus den REM-Aufnahmen der Materialien bestimmt werden. Der Formfaktor wird durch die Evaluierung des Partikelumfangs sowie der Partiklefläche und der Bestimmung des aus der jeweiligen Größe abgeleiteten Durchmessers bestimmt. Die genannten Durchmesser ergeben sich aus

$$d_U = U/\pi \qquad\qquad d_A = \left(4A/\pi\right)^{\frac{1}{2}}.$$

Der Formfaktor der Partikel f leitet sich ab aus dem Partikelumfang U und der Partikelfläche A gemäß:

$$f = \left(\frac{d_A}{d_U}\right)^2 = \left(\frac{4\pi A}{U^2}\right)$$

Im Falle eines idealen sphärischen Partikels sind $d_A$ und $d_U$ gleich groß und es würde sich ein Formfaktor von genau eins ergeben.

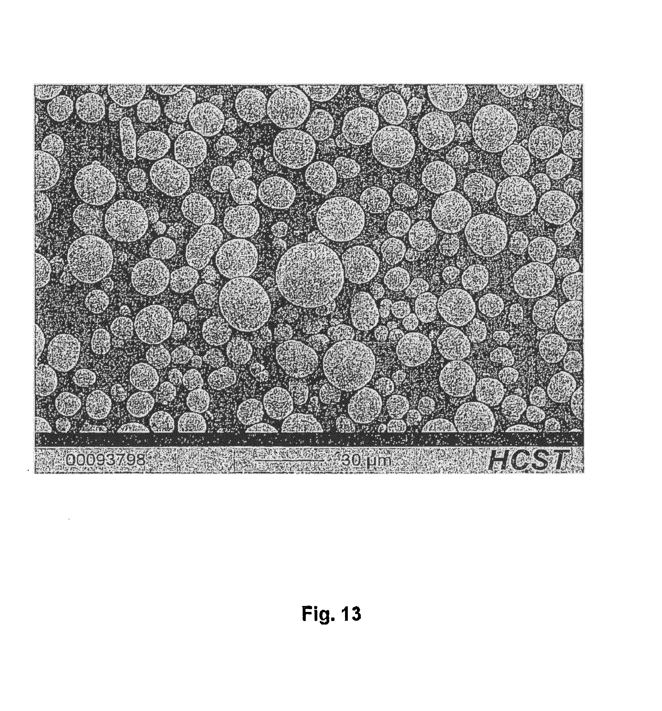

Fig. 13 zeigt beispielhaft eine mit einem Rasterelektromenmikroskop (REM) aufgenommenen Abbildung des Ni,Co-Mischmetallhydroxides nach Beispiel 1.

Der Einsatz der Apparatur IRKS und des erfindungsgemäßen Verfahrens erhöht also bedeutend die Flexibilität gegenüber den klassischen Fällungen in herkömmlichen Reaktorsystemen und die sich hieraus ergebenden Vorteile können für viele verschiedene Verbindungstypen genutzt werden. Diese Vorteile der vorliegenden Erfindung lassen sich wie folgt zusammenfassen:

a) Entkopplung der für Fällungen wichtigen Prozessparameter wie Eduktkonzentrationen, Feststoffkonzentration und Neutralsalzkonzentration und somit Gewinnung neuer Freiheitsgrade, die die Möglichkeiten eines maßgeschneiderten Produktdesigns entscheidend verbessern.

b) Durch Entkopplung von Feststoffverweilzeit und Mutterlaugenverweilzeit Erhöhung der Raum-Zeit-Ausbeute und damit der Produktionsrate.

c) Schaffung eines völlig neuen Freiheitsgerades, indem eine definierte Menge Feinfraktion aus dem System entnommen wird, somit die Partikelgrößenverteilung gezielt beeinflußt werden kann und daher die Eigenschaften des resultierenden Produktes weiter im Hinblick auf das jeweils anwendungstechnisch als optimal vorgegebene Profil zu beeinflussen sind.

Die Erfindung wird anhand der nachfolgenden Beispiele näher erläutert.

Die in den Beispielen angegebenen physikalischen Parameter der Produkte werden wie folgt ermittelt:

- Die Kristallitgröße wird aus der Halbwertsbreite des 101 - Röntgenreflexes berechnet.
- Die spezifische Oberfläche BET wird nach ASTM D 3663 ermittelt.
- Der $D_{50}$-Wert wird aus der Teilchengrößenverteilung, gemessen mit MasterSizer bestimmt.
- Die Klopfdichte wird nach ASTM B 527 ermittelt.
- Der Formfaktor wird nach der Methode aus US 5476530 ermittelt.

Beispiele

Beispiel 1

Der in Fig.10 dargestellte IRKS wird mit 200 Liter wässrigen Mutterlauge enthaltend 2 g/l NaOH, 13 g/l $NH_3$, 130 g/l $Na_2SO_4$ befüllt. Anschließend werden die Zirkulationspumpe (4) mit einem Volumenstrom von 5 $m^3$/h und Pumpe (12) mit einem Volumenstrom von 90 l/h in Betrieb genommen. Die Pumpe (12) fördert die Mutterlauge aus dem Schrägklärer (5) in den Umlaufbehälter (13), von wo aus sie über den freien Überlauf (15) in den IRKS zurückgelangt. Sobald Flüssigkeit aus dem Überlauf (15) austritt, wird die Pumpe (17) in Betrieb genommen, welche Mutterlauge über das Filterelement (16) in den Umlaufbehälter (18) befördert, von wo aus sie über den freien Überlauf (19) in den Umlaufbehälter (13) zurückläuft. Die Pumpe (17) wird mit einem Volumenstrom von 90 l/h betrieben. Nachdem der Rührer (14) mit 300 Umdrehungen pro Minute und der Rührer (2) mit 544 UpM in Betrieb genommen wurde und mit dem Wärmetauscher (3) eine Temperatur von 48°C im gesamten System eingestellt wurde, werden zunächst die Dosierpumpen für die Eduktlösungen in Betrieb genommen. Die Pumpe (6) fördert mit einem Volumenstrom von 25 l/h eine Metallsulfatlösung die 101,9 g/l Nickel und 18,1 g/l Cobalt enthält. Mit Pumpe (7) werden 5,6 l/h Natronlauge (NaOH) mit einer Konzentration von 750 g/l zudosiert. Pumpe (8) fördert 3,1 l/h 25-%ige Ammoniaklösung und Pumpe (9) 21,8 l/h entsalztes Wasser in den Reaktor. Anschließend werden die Pumpen (21) und (22) zugeschaltet, die Mutterlauge aus dem System entnehmen. Pumpe (21) fördert 46,9 l/h zur Abwasser-Behandlungsanlage, in der auch Ammoniak zurückgewonnen wird. Die Pumpe (22) führt 1 l/h der Mutterlauge einem automatischen Analysegerät zu, in dem 3 mal pro Stunde Ammoniak-Gehalt und überschüssige Natronlauge bestimmt werden. Die Pumpe (10) fördert über eine Füllstandsregelung die entstandene Produktsuspension mit einem Feststoffgehalt von 600 g/l aus dem Reaktor zu einer nachgeschalteten Filternutsche, auf der filtriert und gewaschen wird. Nach 100 Stunden hat der Reaktor einen stationären Zustand erreicht. Das, innerhalb der folgenden 24h entstehende das Produkt, wird nach dem Waschen mit 400 l Wasser im Trockenschrank bei 80°C bis zur Gewichtskonstanz getrocknet. Man erhält 115 kg Ni,Co-Mischhydroxid (Ni,Co)$(OH)_2$ mit folgenden Produkteigenschaften:

Kristallitgröße : 110 Angström
BET: 6,3$m^2$/g
$D_{50}$-Wert : 11,2 $\mu$m
Klopfdichte: 2,46 g/$cm^3$.
Die REM-Aufnahme in Fig. 13 zeigt die besondere Sphärizität des hergestellten Ni,Co-Mischhydroxides, dessen Formfaktor 0,8 beträgt.

Beispiel 2

Der in Fig.10 dargestellte IRKS wird mit 200 Liter wässrige Mutterlauge enthaltend 2 g/l NaOH, 13 g/l $NH_3$, 130 g/l $Na_2SO_4$ befüllt. Anschließend werden die Zirkulationspumpe (4) mit einem Volumenstrom von 5 $m^3$/h und Pumpe (12) mit einem Volumenstrom von 90 l/h in Betrieb genommen. Die Pumpe (12) fördert die Mutterlauge aus dem Schrägklärer (5) in den Umlaufbehälter (13), von wo aus sie über den freien Überlauf (15) in den IRKS zurückgelangt. Sobald Flüssigkeit aus dem Überlauf (15) austritt, wird die Pumpe (17) in Betrieb genommen, welche Mutterlauge über das Filterelement (16) in den Umlaufbehälter (18) befördert, von wo aus sie über den freien Überlauf (19) in den Umlaufbehälter (13) zurückläuft. Die Pumpe (17) wird mit einem Volumenstrom von 90 l/h betrieben. Nachdem der Rührer (14) mit 300 Umdrehungen pro Minute und der Rührer (2) mit 544 upm (UpM) in Betrieb genommen wurde und mit dem Wärmetauscher (3) eine Temperatur von 48°C im gesamten System eingestellt wurde, werden zunächst die Dosierpumpen für die Eduktlösungen in Betrieb genommen. Die Pumpe (6) fördert mit einem Volumenstrom von 25 l/h eine Metallsulfatlösung die 101,9 g/l Nickel. und 18,1 g/l Cobalt enthält. Mit Pumpe (7) werden 5,6 l/h Natronlauge (NaOH) mit einer Konzentration von 750 g/l zudosiert. Pumpe (8) fördert 3,1 l/h 25 %ige Ammoniaklösung und Pumpe (9) 21,8 l/h entsalztes Wasser in den Reaktor. Anschließend werden die Pumpen (21) und (22) zugeschaltet, die Mutterlauge aus dem System entnehmen. Pumpe (21) fördert 15,4 l/h zur Abwasser-Behandlungsanlage, in der auch Ammoniak zurückgewonnen wird. Die Pumpe (22) führt 1 l/h der Mutterlauge einem automatischen Analysegerät zu, in dem 3 mal pro Stunde Ammoniak-Gehalt und überschüssige Natronlauge bestimmt werden. Mit der Pumpe (23) werden 32L/h trübe Lösung mit einem Feststoffgehalt von 1,5g/l aus dem IRKS (Umlaufbehälter (10)) entfernt. Die Pumpe (10) fördert über eine Füllstandsregelung die entstandene Produktsuspension mit einem Feststoffgehalt von 600 g/l aus dem Reaktor zu einer nachgeschalteten Filternutsche, auf der filtriert und gewaschen wird. Nach 100 Stunden hat der Reaktor einen stationären Zustand erreicht. Das innerhalb der folgenden 24h entstehende das Produkt wird nach dem Waschen mit 400 l Wasser im Trockenschrank bei 80°C bis zur Gewichtskonstanz getrocknet. Man erhält 115 kg Ni,Co-Mischhydroxid $(Ni,Co)(OH)_2$ mit folgenden Produkteigenschaften:

Kristallitgröße : 108Angström
BET: $6,1 m^2/g$
$D_{50}$-Wert: $15,2 \mu m$
Klopfdichte: $2,54 g/cm^3$.
Formfaktor: 0,9

Beispiel 3

Der in Fig.11 dargestellte IRKS wird mit 200 Liter wässrigen Mutterlauge enthaltend 5 g/l NaOH, 10 g/l $NH_3$, 172 g/l $Na_2SO_4$ befüllt. Anschließend werden die Zirkulationspumpe (4) mit einem Volumenstrom von 5 $m^3/h$ und Pumpe (12) mit einem Volumenstrom von 90 l/h in Betrieb genommen. Die Pumpe (12) fördert die Mutterlauge aus dem Schrägklärer (5) in den Umlaufbehälter (13), von wo aus sie über den freien Überlauf (15) in den IRKS zurückgelangt. Sobald Flüssigkeit aus dem Überlauf (15) austritt, wird die Pumpe (17) in Betrieb genommen, welche Mutterlauge über das Filterelement (16) in den Umlaufbehälter (18) befördert, von wo aus sie über den freien Überlauf (19) in den Umlaufbehälter (13) zurückläuft. Die Pumpe (17) wird mit einem Volumenstrom von 90 l/h betrieben. Nachdem der Rührer (14) mit 300 Umdrehungen pro Minute und der Rührer (2) mit 480 upm (UpM) in Betrieb genommen wurde und mit dem Wärmetauscher (3) eine Temperatur von 45°C im gesamten System eingestellt wurde, werden zunächst die Dosierpumpen für die Eduktlösungen in Betrieb genommen. Die Pumpe (6) fördert mit einem Volumenstrom von 20,4 l/h eine Metallsulfatlösung die 109,6 g/l Nickel, 2,84 g/l Cobalt und 7,57 g/l Zink enthält. Mit Pumpe (7) werden 4,62 l/h Natronlauge (NaOH) mit einer Konzentration von 750 g/l zudosiert. Pumpe (8) fördert 1,51 l/h 25 %ige Ammoniaklösung und Pumpe (9) 8,29 l/h entsalztes Wasser in den Reaktor. Anschließend werden die Pumpen (21) und (22) zugeschaltet, die Mutterlauge aus dem System entnehmen. Pumpe (21) fördert 3,0 l/h zur Abwasser-Behandlungsanlage, in der auch Ammoniak zurückgewonnen wird. Die Pumpe (22) führt 1 l/h der Mutterlauge einem automatischen Analysegerät zu, in dem 3 mal pro Stunde Ammoniak-Gehalt und überschüssige Natronlauge bestimmt werden. Mit der Pumpe (23) werden 20,5Uh trübe Lösung mit einem Feststoffgehalt von 2,0g/l aus dem IRKS (Umlaufbehälter (10)) entfernt. Die Pumpe (10) fördert über eine Füllstandsregelung die entstandene Produktsuspension mit einem Feststoffgehalt von 360 g/l aus dem Reaktor zu einer nachgeschalteten Filternutsche, auf der filtriert und gewaschen wird. Nach 90 Stunden hat der Reaktor einen stationären Zustand erreicht Das innerhalb der folgenden 24h entstehende das Produkt wird nach dem Waschen mit 400 l Wasser im Trockenschrank bei 80°C bis zur Gewichtskonstanz getrocknet. Man erhält 93 kg Ni,Co,Zn-Mischhydroxid $(Ni,Co;Zn)(OH)_2$ mit folgenden Produkteigenschaften:

Kristallitgröße: 67Angström
BET: $10,1 m^2/g$
D50-Wert: $15,1 \mu m$
Klopfdichte: $2,40 g/cm^3$.
Formfaktor: 0,75

Vergleichsbeispiel 1

Der in Fig.10 dargestellte IRKS wird mit 200 Liter wässrige Mutterlauge enthaltend 2 g/l NaOH, 13 g/l $NH_3$, 130 g/l $Na_2SO_4$ befüllt. Anschließend werden die Zirkulationspumpe (4) mit einem Volumenstrom von 5 $m^3/h$ und Pumpe (12) mit einem Volumenstrom von 90 l/h in Betrieb genommen. Die Pumpe (12) fördert die Mutterlauge aus dem Schrägklärer (5) in den Umlaufbehälter (13), von wo aus sie über den freien Überlauf (15) in den IRKS zurückgelangt. Sobald Flüssigkeit aus dem Überlauf (15) austritt, wird die Pumpe (17) in Betrieb genommen, welche Mutterlauge über das Filterelement (16) in den Umlaufbehälter (18) befördert, von wo aus sie über den freien Überlauf (19) in den Umlaufbehälter (13) zurückläuft. Die Pumpe (17) wird mit einem Volumenstrom von 90 l/h betrieben. Nachdem der Rührer (14) mit 300 Umdrehungen pro Minute und der Rührer (2) mit 544 upm (UpM) in Betrieb genommen wurde und mit dem Wärmetauscher (3) eine Temperatur von 48°C im gesamten System eingestellt wurde, werden zunächst die Dosierpumpen für die Eduktlösungen in Betrieb genommen. Die Pumpe (6) fördert mit einem Volumenstrom von 4,01 l/h eine Metallsulfatlösung die 101,9 g/l Nickel und 18,1 g/l Cobalt enthält. Mit Pumpe (7) werden 0,89 l/h Natronlauge (NaOH) mit einer Konzentration von 750 g/l zudosiert. Pumpe (8) fördert 0,50 l/h 25 %ige Ammoniaklösung und Pumpe (9) 3,49 l/h entsalztes Wasser in den Reaktor. Anschließend wird die Pumpe (22) zugeschaltet, die 1l/h Mutterlauge aus dem System entnimmt und einem automatischen Analysegerät zuführt, in dem 3 mal pro Stunde Ammoniak-Gehalt und überschüssige Natronlauge bestimmt werden. Die Pumpe (10) fördert über eine Füllstandsregelung die entstandene Produktsuspension mit einem Feststoffgehalt von 96g/l aus dem Reaktor zu einer nachgeschalteten Filternutsche, auf der filtriert und gewaschen wird. Nach 100 Stunden hat der Reaktor einen stationären Zustand erreicht Das innerhalb der folgenden 24h entstehende das Produkt wird nach dem Waschen mit 400 l Wasser im Trockenschrank bei 80°C bis zur Gewichtskonstanz getrocknet. Man erhält 115 kg Ni,Co-Mischhydroxid $(Ni,Co)(OH)_2$ mit folgenden Produkteigenschaften:

Kristallitgröße : 106Angström
BET: $13,1m^2/g$
D50-Wert TGV: $21,3\mu m$
Klopfdichte: $2,23g/cm^3$.

Vergleichsbeispiel 2

Der in Fig.10 dargestellte IRKS wird mit 200 Liter wässrigen Mutterlauge enthaltend 5 g/l NaOH, 10 g/l $NH_3$, 172 g/l $Na_2SO_4$ befüllt. Anschließend werden die Zirkulationspumpe (4) mit einem Volumenstrom von 5 $m^3$/h und Pumpe (12) mit einem Volumenstrom von 90 l/h in Betrieb genommen. Die Pumpe (12) fördert die Mutterlauge aus dem Schrägklärer (5) in den Umlaufbehälter (13), von wo aus sie über den freien Überlauf (15) in den IRKS zurückgelangt. Sobald Flüssigkeit aus dem Überlauf (15) austritt, wird die Pumpe (17) in Betrieb genommen, welche Mutterlauge über das Filterelement (16) in den Umlaufbehälter (18) befördert, von wo aus sie über den freien Überlauf (19) in den Umlaufbehälter (13) zurückläuft. Die Pumpe (17) wird mit einem Volumenstrom von 90 l/h betrieben. Nachdem der Rührer (14) mit 300 Umdrehungen pro Minute und der Rührer (2) mit 480 upm (UpM) in Betrieb genommen wurde und mit dem Wärmetauscher (3) eine Temperatur von 45°C im gesamten System eingestellt wurde, werden zunächst die Dosierpumpen für die Eduktlösungen in Betrieb genommen. Die Pumpe (6) fördert mit einem Volumenstrom von 6,69 l/h eine Metallsulfatlösung die 109,6 g/l Nickel, 2,84 g/l Cobalt und 7,57 g/l Zink enthält. Mit Pumpe (7) werden 1,52 l/h Natronlauge (NaOH) mit einer Konzentration von 750 g/l zudosiert. Pumpe (8) fördert 1,51 l/h 25 %ige Ammoniaklösung und Pumpe (9) 8,29 l/h entsalztes Wasser in den Reaktor. Anschließend wird die Pumpe (22) zugeschaltet, die 1 l/h Mutterlauge einem automatischen Analysegerät zuführt, in dem .3 mal pro Stunde Ammoniak-Gehalt und überschüssige Natronlauge bestimmt werden. Die Pumpe (10) fördert über eine Füllstandsregelung die entstandene Produktsuspension mit einem Feststoffgehalt von 120 g/l aus dem Reaktor zu einer nachgeschalteten Filternutsche, auf der filtriert und gewaschen wird. Nach 90 Stunden hat der Reaktor einen stationären Zustand erreicht Das innerhalb der folgenden 24h entstehende das Produkt wird nach dem Waschen mit 150 l Wasser im Trockenschrank bei 80°C bis zur Gewichtskonstanz getrocknet. Man erhält 30,5 kg Ni,Co,Zn-Mischhydroxid $(Ni,Co;Zn)(OH)_2$ mit folgenden Produkteigenschaften:

Kristallitgröße : 63Angström
BET: $12,0m^2/g$
$D_{50}$-Wert: $11,9\mu m$
Klopfdichte: $2,21g/cm^3$.

**Patentansprüche**

1. Verfahren zur Herstellung von pulverförmigen Ni, Co-Mischhydroxiden der allgemeinen Formel $Ni_xCo_{1-x}(OH)_2$, wobei 0 < x < 1 ist und das Mischhydroxid eine BET-Oberfläche von weniger als 20 $m^2/g$, gemessen nach ASTM D 3663, und eine Klopfdichte von größer oder gleich 2,4 $g/cm^3$, gemessen nach ASTM B 527 aufweist, durch Fällung bestehend aus folgenden Schritten:

- Bereitstellen von mindestens einer ersten und einer zweiten Eduktlösung,
- Zusammenführen von mindestens der ersten und der zweiten Eduktlösung in einem Reaktor, der einen in den Reaktor integrierten geneigten Schrägklärer aufweist,
- Erzeugung einer homogen durchmischten Reaktionszone im Reaktor,
- Fällung der Verbindungen in der Reaktionszone und Erzeugung einer Produktsuspension, bestehend aus unlöslichem Produkt und Mutterlauge,
- Partielle Abtrennung der Mutterlauge vom unlöslichen Produkt über den Schrägklärer, wobei ein Feinkornanteil mit einer definierten Obergrenze der Teilchendurchmesser im Oberlauf des Schrägklärers eingestellt und gegebenenfalls der Trübelauf partiell abgetrennt wird, so dass eine Fällproduktsuspension hergestellt wird, deren Konzentration des Fällproduktes höher als die stöchiometrische Konzentration ist,
- Entnahme der Suspension aus dem Reaktor,
- Filtration und Trocknung des Fällproduktes.

2. Verfahren nach Anspruch 1, **dadurch gekennzeichnet, dass** die partielle Abtrennung der Mutterlauge durch direkte Entnahme des Oberlaufs des Schrägklärers erfolgt.

3. Verfahren nach Anspruch 2, **dadurch gekennzeichnet, dass** der Oberlauf des Schrägklärers 0 bis 50% des Feststoffgehaltes der Produktsuspension aufweist.

4. Verfahren nach Anspruch 2, **dadurch gekennzeichnet, dass** der Oberlauf des Schrägklärers 0 bis 30% des Feststoffgehaltes der Produktsuspension aufweist.

5. Verfahren nach Anspruch 2, **dadurch gekennzeichnet, dass** der Oberlauf des Schrägklärers 0 bis 15% des Feststoffgehaltes der Produktsuspension aufweist.

6. Verfahren nach einem der Ansprüche 2 bis 5, **dadurch gekennzeichnet, dass** die maximale Partikelgröße im Oberlauf des Schrägklärers 30% des $D_{50}$-Wertes der Partikelgrößenverteilung beträgt.

7. Verfahren nach Anspruch 1, **dadurch gekennzeichnet, dass** die Konzentration des Fällproduktes in der Suspension ein Vielfaches der stöchiometrischen Menge beträgt.

8. Verfahren nach Anspruch 1 oder 2, **dadurch gekennzeichnet, dass** bis zu 90% der Mutterlauge partiell abgetrennt werden.

**Claims**

1. Process for the preparation of pulverulent Ni,Co-mixed hydroxides of the general formula $Ni_xCo_{1-x}(OH)_2$, where $0 < x < 1$ and the mixed hydroxide has a BET surface, measured according to ASTM D 3663, of less than 20 m$^2$/g and a tap density, measured according to ASTM B 527, of greater than or equal to 2.4 g/cm$^3$, by precipitation, consisting of the following steps:

- provision of at least a first and a second reactant solution,
- combined feed of at least the first and the second reactant solution to a reactor which has an oblique inclined clarifier integrated into the reactor,
- generation of a homogeneously intensively mixed reaction zone in the reactor,
- precipitation of the compounds in the reaction zone and formation of a product suspension consisting of insoluble product and mother liquor,
- partial separation of the mother liquor from the insoluble product via the inclined clarifier, where a fine-grain fraction with a defined upper particle-diameter limit is set in the overflow of the inclined clarifier and optionally the turbid liquor is partially removed, so that a precipitation product suspension is prepared, the concentration of the precipitation product of which is greater than the stoichiometric concentration,
- removal of the suspension from the reactor,
- filtration and drying of the precipitation product.

2. Process according to claim 1, **characterised in that** the partial separation of the mother liquor is carried out by direct removal of the overflow of the inclined clarifier.

3. Process according to claim 2, **characterised in that** the overflow of the inclined clarifier comprises 0 to 50% of the solids content of the product suspension.

4. Process according to claim 2, **characterised in that** the overflow of the inclined clarifier comprises 0 to 30% of the solids content of the product suspension.

5. Process according to claim 2, **characterised in that** the overflow of the inclined clarifier comprises 0 to 15% of the solids content of the product suspension.

6. Process according to any of claims 2 to 5, **characterised in that** the maximum particle size in the overflow of the inclined clarifier is 30% of the $D_{50}$ value of the particle size distribution.

7. Process according to claim 1, **characterised in that** the concentration of the precipitation product in the suspension is a multiple of the stoichiometric amount.

8. Process according to claim 1 or 2, **characterised in that** up to 90% of the mother liquor is partially separated.

## Revendications

1. Procédé pour la préparation par précipitation d'hydroxydes mixtes de Ni,Co sous forme de poudre de formule générale $Ni_xCo_{1-x}(OH)_2$, $0 < x < 1$ et l'hydroxyde mixte présentant une surface BET inférieure à 20 $m^2$/g, mesurée selon la norme ASTM D 3663, et une densité tassée supérieure ou égale à 2,4 g/$cm^3$, mesurée selon la norme ASTM B 527, constitué des étapes suivantes :

   - mise à disposition d'au moins une première et d'une deuxième solution de départ,
   - réunion d'au moins la première et la deuxième solution de départ dans un réacteur, qui présente un clarificateur à tôles inclinées intégré dans le réacteur,
   - génération d'une zone de réaction mélangée de manière homogène dans le réacteur,
   - précipitation des composés dans la zone de réaction et génération d'une suspension de produit, constituée de produit insoluble et de lessive-mère,
   - séparation partielle de la lessive-mère du produit insoluble via le clarificateur à tôles inclinées, une proportion de grains fins présentant une limite supérieure définie du diamètre de particule étant réglée dans la surverse du clarificateur à tôles inclinées et le liquide trouble étant le cas échéant partiellement séparé de manière telle qu'on prépare une suspension de produit précipité dont la concentration en produit précipité est supérieure à la concentration stoechiométrique,
   - prélèvement de la suspension du réacteur,
   - filtration et séchage du produit précipité.

2. Procédé selon la revendication 1, **caractérisé en ce que** la séparation partielle de la lessive-mère est réalisée par prélèvement direct de la surverse du clarificateur à tôles inclinées.

3. Procédé selon la revendication 2, **caractérisé en ce que** la surverse du clarificateur à tôles inclinées présente 0 à 50% de la teneur en solides de la suspension de produits.

4. Procédé selon la revendication 2, **caractérisé en ce que** la surverse du clarificateur à tôles inclinées présente 0 à 30% de la teneur en solides de la suspension de produits.

5. Procédé selon la revendication 2, **caractérisé en ce que** la surverse du clarificateur à tôles inclinées présente 0 à 15% de la teneur en solides de la suspension de produits.

6. Procédé selon l'une quelconque des revendications 2 à 5, **caractérisé en ce que** la grosseur maximale de particule dans la surverse du clarificateur à tôles inclinées représente 30% de la valeur $D_{50}$ de la répartition granulométrique.

7. Procédé selon la revendication 1, **caractérisé en ce que** la concentration en produit précipité dans la suspension représente un multiple de la quantité stoechiométrique.

8. Procédé selon la revendication 1 ou 2, **caractérisé en ce qu'**on sépare partiellement jusqu'à 90% de la lessive-mère.

Fig. 1

Fig. 2

Fig. 3

Fig. 4

Fig. 5

5

26

28

**Fig. 6**

5

26

27

**Fig. 7**

**Fig. 8**

**Fig. 9**

**Fig. 10**

Fig. 11

**Fig. 12**

**Fig. 13**

**IN DER BESCHREIBUNG AUFGEFÜHRTE DOKUMENTE**

**In der Beschreibung aufgeführte Patentdokumente**

- JP 2006340 A
- EP 0658514 B1
- US 20030054252 A1
- US 2003005452 A
- EP 1637503 A
- WO 2004032260 A2
- US 5476530 A

**In der Beschreibung aufgeführte Nicht-Patentliteratur**

- *Z. Kristallogr,* 2005, vol. 220, 306-315
- **ZLOKARNIK.** Rührtechnik, Theorie und Praxis. Springerverlag, 1999